(19) Europäisches Patentamt / European Patent Office / Office européen des brevets

(11) **EP 2 520 964 A1**

(12) **EUROPEAN PATENT APPLICATION**
published in accordance with Art. 153(4) EPC

(43) Date of publication:
**07.11.2012 Bulletin 2012/45**

(51) Int Cl.:
*G02B 13/00* (2006.01)     *G02B 7/02* (2006.01)
*G02B 13/18* (2006.01)

(21) Application number: **10840748.7**

(22) Date of filing: **20.12.2010**

(86) International application number:
**PCT/JP2010/007378**

(87) International publication number:
**WO 2011/080888 (07.07.2011 Gazette 2011/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2010 JP 2010084288
28.12.2009 JP 2009298648**

(71) Applicant: **Sony Corporation
Tokyo 108-0075 (JP)**

(72) Inventor: **BABA, Tomohiko
Tokyo 108-0075 (JP)**

(74) Representative: **Robinson, Nigel Alexander Julian
et al
D Young & Co LLP
120 Holborn
London EC1N 2DY (GB)**

(54) **OPTICAL UNIT AND IMAGING DEVICE**

(57)    [Object] To provide an optical unit and an image pickup apparatus that are capable of suppressing a variation in focus position even in a case of a high pixel count and realizing an image pickup optical system that is compact and inexpensive and has a high resolution and high heat-resistance, while suppressing an increase of the number of parts.

[Solving Means] An optical unit (100) includes a first lens group (110) and a second lens group (120), the first lens group (110) and the second lens group (120) being sequentially arranged from an object side to an image plane side, the first lens group (110) including a first lens element (111), a transparent body (112), and a second lens element (113), the first lens element (111), the transparent body (112), and the second lens element (113) being sequentially arranged from the object side to the image plane side, the second lens group (120) including only a third lens element (121).

FIG.1

111: First lens element
112: Transparent body (glass substrate)
113: Second lens element
121: Third lens element

**Description**

Technical Field

The present invention relates to an optical unit and an image pickup apparatus that are applied to image pickup equipment.

Background Art

For image pickup equipment mounted on cellular phones, personal computers (PCs), and the like in recent years, a high resolution, low costs, and miniaturization are strongly demanded.
A cell pitch of an image pickup device such as a CCD (Charge Coupled Device) image sensor and a CMOS (Complementary Metal Oxide Semiconductor) image sensor is demanded to become dramatically small, and high imaging performance having a smaller optical aberration, particularly axial chromatic aberration than a normal optical system is demanded in an optical system.
Further, in response to the demand for costs, there is known a technique of reducing costs by forming a lens in the form of a wafer.
As a typical example of the above, a technique disclosed in Patent Document 1 is known.
The technique disclosed therein is referred to as a hybrid system.
In the hybrid system, a large number of lenses are formed on a wafer-like glass substrate, and an image pickup device wafer and this lens device are attached in the wafer form and then individually cut to produce a large number of camera modules at the same time.
Further, as a general image pickup lens that is used for image pickup equipment mounted on cellular phones, PCs, and the like, for example, a technique disclosed in Patent Document 2 is known.
Patent Document 1: US Patent Application Ser. No. 2006/0044450A1
Patent Document 2: Japanese Patent Application Laid-open No. 2005-352317

Disclosure of the Invention

Problems to be solved by the Invention

Advantages of the hybrid system described above reside in that an IR cut filter and a diaphragm can be formed on a glass wafer, those separate parts are unnecessary unlike in the past, and since a large number of finished products are obtained at the same time, the number of man-hours per piece is small and costs can be reduced.
In CIF, VGA, and the like, an imaging area is small. For that reason, a variation in focus position of a large number of lens devices formed in the form of a wafer does not become a serious problem, which is advantageous.
However, disadvantages of the hybrid system described above reside in that in a high pixel count of 3M pixels or more, an imaging area becomes large. For that reason, the variation in focus position of the lens devices described above becomes large. As a result, in the case where the image pickup device and the lens device are attached to each other in the form of a wafer, a defocus defect occurs frequently, and the first object of production at low costs cannot be achieved.
Advantages of the lens disclosed in Patent Document 2 reside in that many aspheric surfaces are used in the 3-layer structure so that high image-forming performance is obtained, and a lens projection form is circular and therefore the lens is easy to be subjected to a focus adjustment when it is disposed in a screw lens barrel and the like.
However, this lens requires an IR cut filter as a separate part. Further, a diaphragm and the like are separate parts. Therefore, the number of parts is large, which is disadvantageous.
The IR cut filter is required to be interposed between the lens and the image pickup device, and therefore a long back focus is required, which becomes a constraint on lens designing.
The present invention provides an optical unit and an image pickup apparatus that are capable of suppressing a variation in focus position even in a case of a high pixel count and realizing an image pickup optical system that is compact and inexpensive and has high-resolution and high heat-resistance, while suppressing an increase of the number of parts.

Means for solving the Problem

According to a first aspect of the present invention, there is provided an optical unit including a hybrid-type lens including a plurality of resin lenses formed on a plate-like substrate, the hybrid-type lens including at least one group, and a lens referred to as a casting, mold, or the like in which a resin is integrally formed, the lens including at least one group. Preferably, the optical unit includes a first lens group and a second lens group, the first lens group and the second lens group being sequentially arranged from an object side to an image plane side, the first lens group including a first lens element, a transparent body, and a second lens element, the first lens element, the transparent body, and the second lens element being sequentially arranged from the object side to the image plane side, the second lens group including only a third lens element.

According to a second aspect of the present invention, there is provided an optical unit including a first lens group and a second lens group, the first lens group and the second lens group being sequentially arranged from an object side to an image plane side, the first lens group including a first lens element, a second lens element, a transparent body, and a third lens element, the first lens element, the second lens element, the transparent body, and the third lens element being sequentially arranged from the object side to the image plane side, the first lens element and the second lens element forming a doublet lens, the second lens group including only a fourth lens element.

According to a third aspect of the present invention, there is provided an image pickup apparatus including an image pickup device and an optical unit to form an image of a subject on the image pickup device, the optical unit including a first lens group, and a second lens group, the first lens group and the second lens group being sequentially arranged from an object side to an image plane side, the first lens group including a first lens element, a transparent body, and a second lens element, the first lens element, the transparent body, and the second lens element being sequentially arranged from the object side to the image plane side, the second lens group including only a third lens element.

According to a fourth aspect of the present invention, there is provided an image pickup apparatus including an image pickup device and an optical unit to form an image of a subject on the image pickup device, the optical unit including a first lens group, and a second lens group, the first lens group and the second lens group being sequentially arranged from an object side to an image plane side, the first lens group including a first lens element, a second lens element, a transparent body, and a third lens element, the first lens element, the second lens element, the transparent body, and the third lens element being sequentially arranged from the object side to the image plane side, the first lens element and the second lens element forming a doublet lens, the second lens group including only a fourth lens element.

Effect of the Invention

According to the present invention, it is possible to suppress a variation in focus position even in a case of a high pixel count and realize an image pickup optical system that is compact and inexpensive and has a high resolution and high heat-resistance, while suppressing an increase of the number of parts. Brief Description of Drawings

[Fig. 1] A diagram showing a structural example of an image pickup lens according to a first embodiment of the present invention.

[Fig. 2] A diagram showing lenses and a substrate constituting lens groups of the image pickup lens of this embodiment and surface numbers assigned to a cover glass constituting an image pickup portion.

[Figs. 3] Aberration diagrams respectively showing a spherical aberration, an astigmatism, and a distortion in Example 1.

[Fig. 4] A diagram showing a structural example of an image pickup lens according to a second embodiment of the present invention.

[Figs. 5] Aberration diagrams respectively showing a spherical aberration, an astigmatism, and a distortion in Example 2.

[Fig. 6] A diagram showing a structural example of an image pickup lens according to a third embodiment of the present invention.

[Figs. 7] Aberration diagrams respectively showing a spherical aberration, an astigmatism, and a distortion in Example 3.

[Fig. 8] A diagram showing a structural example of an image pickup lens according to a fourth embodiment of the present invention.

[Fig. 9] A diagram showing lenses and a substrate constituting lens groups of the image pickup lens of this embodiment and a surface number assigned to a cover glass constituting an image pickup portion.

[Figs. 10] Aberration diagrams respectively showing a spherical aberration, an astigmatism, and a distortion in Example 4.

[Fig. 11] A diagram schematically showing a wafer level optic according to a fifth embodiment of the present invention.

[Fig. 12] A diagram schematically showing an image pickup lens according to a sixth embodiment of the present invention.

[Fig. 13] A block diagram showing a structural example of an image pickup apparatus adopting an image pickup lens according to this embodiment.

Best Modes for Carrying Out the Invention

Hereinafter, embodiments of the present invention will be described with reference to the drawings.
It should be noted that descriptions will be given in the following order.

1. First embodiment (first structural example of image pickup lens adopting optical unit)
2. Second embodiment (second structural example of image pickup lens adopting optical unit)
3. Third embodiment (third structural example of image pickup lens adopting optical unit)
4. Fourth embodiment (fourth structural example of image pickup lens adopting optical unit)
5. Fifth embodiment (general idea of wafer opt)
6. Sixth embodiment (fifth structural example of image pickup lens)
7. Seventh embodiment (structural example of image pickup apparatus)

<1. First embodiment>

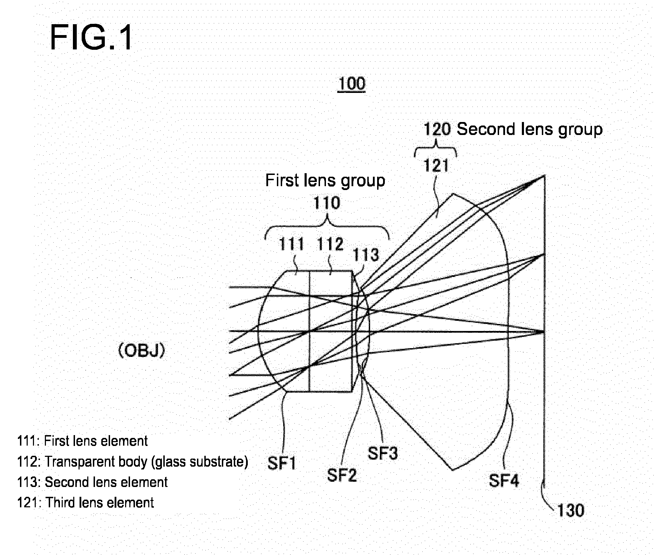

Fig. 1 is a diagram showing a structural example of an image pickup lens adopting an optical unit according to a first embodiment of the present invention.
As shown in Fig. 1, an image pickup lens 100 according to the first embodiment includes a first lens group 110, a second lens group 120, and an image plane 130 that are sequentially arranged from an object side OBJS to an image plane side.
The image pickup lens 100 is formed as a single focus lens. Further, the first lens group 110 and the second lens group 120 form an optical unit.
The first lens group 110 is constituted of a bonded body including a plurality of lens elements sandwiching a transparent body.
The second lens group 120 is constituted of only one lens element.
Specifically, the first lens group 110 is constituted of replica lenses formed at the top and bottom of a glass substrate.
The first lens group 110 is constituted of a bonded body including a first lens element 111, a transparent body 112, and a second lens element 113 that are sequentially arranged from an object side OBJS to an image plane 130 side.
Here, the first lens element 111 has a plane-convex shape and a large Abbe number. Used for the transparent body (glass substrate) 112 is a glass plate corresponding to BK7 by Schott Glass Technologies, Inc. for the purpose of production at low costs. As the second lens element 113, a plane-concave lens is formed.
Further, a diaphragm is realized by attaching in advance a material allowing substantially no transmission, such as a chromium film, on the object side of the glass substrate.
The second lens group 120 is constituted of only a third lens element 121 obtained by forming a single glass material on a lens.
As described above, the first lens group 110 is formed of the bonded body including the lens elements and the transparent body, and the second lens group 120 is formed of only the lens element. Therefore, the lens surface of the image pickup lens 100 as a whole includes a first surface SF1, a second surface SF2, a third surface SF3, and a fourth surface SF4.
The first surface SF1 is formed by an object side surface of the first lens element 111, and the second surface SF2 is formed by an image plane side surface of the second lens element 113.
The third surface SF3 is formed by an object side surface of the third lens element 121, and the fourth surface SF4 is formed by an image plane side surface of the third lens element 121.
Here, the first lens group 110 has a structure having a positive power with a strong combined focal length and a large Abbe number of an incident surface, and the second lens group 120 has a structure having a negative power and a small Abbe number, which form a lens unit in which an optical path length is short and a chromatic aberration is favorably corrected.
Further, the image side surface (second surface) of the second lens element 113 of the first lens group 110 and the object side surface (third surface) of the third lens element 121 of the second lens group 120 face each other with the air therebetween.
Then, both of the second surface and the third surface have a concave shape, and because of a large difference in length between an upper light beam and a lower light beam that pass through the air in an off-axis light flux, a comatic aberration and an astigmatism are favorably corrected.
Here, it is assumed that a large number of structures described above are produced in the form of a wafer at the same time.

A large number of replica lenses are formed at the top and bottom of the glass substrate, each of which is set as the first lens group 110. Next, a large number of single glass materials are formed in the form of a wafer and are each set as the second lens group 120.

Those two wafer-like lens groups are attached to each other, and a large number of lenses are produced at the same time. Here, for the attachment, a spacer may be interposed, or a protector or spacer may be attached at the top or bottom.

In many cases, a function of an IR cut filter is added in advance to the glass substrate of the first lens group 110.

With this, an additional IR cut filter is unnecessary, which allows miniaturization and low costs. With those, a combination between one referred to as a hybrid according to this disclosure, in which the replica lenses are formed on the glass substrate, and one referred to as a casting, in which the same glass material is processed in the form of a lens, can realize an inexpensive optical unit having excellent characteristics.

Then, the image pickup lens 100 of this embodiment is basically formed such that one of the first lens group 110 and the second lens group 120 has a positive power and the other has a negative power.

In the image pickup lens 100 as a single focus lens, it is assumed that an imaging plane (image reception plane) of a solid-state image pickup device such as a CCD sensor and a CMOS sensor is provided on the image plane 130. A cover glass (not shown) may be interposed between the fourth surface SF4 and the image plane 130. Other than the cover glass, an IR cut filter, a lowpass filter, and the like that are formed of a resin or glass, an optical member may be provided between the fourth surface SF4 and the image plane 130.

It should be noted that in Fig. 1 in this embodiment, the left-hand side is the object side (front), and the right-hand side is the image plane side (back).

In addition, a light flux that has entered from the object side is imaged on the image plane 130.

Hereinafter, the structure of the image pickup lens of this embodiment and operations thereof will be described.

The image pickup lens 100 has a 2-group 4-layer structure.

In the first lens group 110, the first lens element 111 is a plane-convex lens that is convex on the object side and planar on the image plane side.

Further, the second lens element 113 is a plane-concave lens that is planar on the object side and concave on the image plane side.

In the second lens group 120, the third lens element 121 is a plane-convex lens that is concave on the object side and convex on the image plane side.

For example, the third lens element 121 is a plane-concavo-convex lens that is convex and concave on the image plane side.

Specifically, in the first lens group 110, the first lens element 111 is formed by an aspheric lens whose surface on the object side forming the first surface SF1 is convex and that has a large Abbe number $v_{L1}$.

The transparent body 113 is formed by a flat-plate glass substrate (transparent substrate) having, for example, a small Abbe number $v_{g1}$ and a high refractive index $n_{g1}$.

The second lens element 113 is formed by an aspheric lens whose surface on the image plane side forming the second surface SF2 is concave.

In the first lens group 110, the first lens element 111 is formed on the object side of the transparent body (glass substrate) 112.

In addition, the second lens element 113 is bonded to the image plane side surface of the transparent body (glass substrate) 112.

Moreover, a diaphragm is attached on the object side of the transparent body 112 as a material having a light-shield operation, such as a chromium film.

In the second lens group 120, the third lens element 121 is formed by an aspheric lens whose object side surface forming the third surface SF3 is concave, and whose surface on the image plane side is convex or concavo-convex.

It should be noted that in descriptions below, the glass substrate may be denoted by the same reference numeral as the transparent body 112.

The first lens element 111, the second lens element 113, and the third lens element 121 are formed of a UV-curable resin, a thermosetting resin, plastic, or the like.

As described above, the image pickup lens 100 according to the first embodiment has a 2-group 4-layer structure. The first lens group 110 is formed by, from the object side to the image plane side, the first surface SF1 of the aspheric lens that is convex and has a large Abbe number $v_{s1}$, the transparent body (glass substrate) 112 having a small Abbe number $v_{g1}$ and a high refractive index $n_{g1}$, and the second surface SF2 of the concave aspheric lens.

The second lens group 120 is formed by, from the object side to the image plane side, the third surface SF3 of the concave aspheric lens, and the fourth surface SF4 of the aspheric lens.

The image pickup lens 1 of this embodiment as a single focus lens is structured to satisfy the following conditional expressions (1) to (6).

The conditional expression (1) is a conditional expression on the Abbe number $\nu_{L1}$ of the first lens element 111.
[Expression 1]

$$45 \leq \nu_{L1} \leq 80 \ ... \ (1)$$

In the conditional expression (1), when the lower limit is exceeded, a chromatic aberration occurs, and an optical unit that supports a high resolution is not obtained. When the upper limit is exceeded, costs of the materials are increased, which also does not suit the purpose.
The conditional expression (2) is a conditional expression on the Abbe number $\nu_{L3}$ of the third lens element.
[Expression 2]

$$20 \leq \nu_{L3} \leq 67 \ ... \ (2)$$

In the conditional expression (2), when the lower limit is exceeded, costs of the materials are increased, which also does not suit the purpose. When the upper limit is exceeded, a chromatic aberration occurs, and an optical unit that supports a high resolution is not obtained.
The conditional expression (3) is a conditional expression on a combined focal length fg1 of the first lens group 110.
[Expression 3]

$$0.4 \leq fg1/f \leq 2.5 \ ... \ (3)$$

In the conditional expression (3), when the lower limit is exceeded, the power becomes too strong to perform the production due to a degradation of a production tolerance of inter-group decentering.
When the upper limit is exceeded, a total optical length is elongated, which is inappropriate for miniaturization. For that reason, a clearance becomes large in an optical axis direction, and the production in the form of a wafer becomes difficult to be performed.
The conditional expression (4) is a conditional expression on a focal length fg2 of the second lens group 120.
[Expression 4]

$$-10 \leq fg2/f \leq -0.4 \ ... \ (4)$$

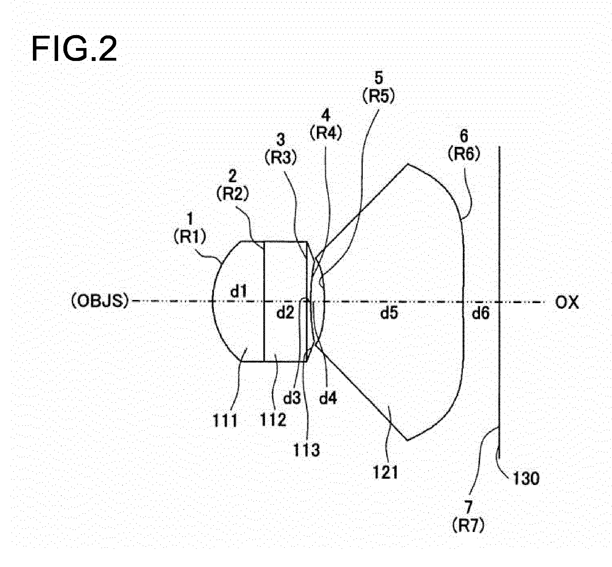

In the conditional expression (4), when the lower limit is exceeded, a power of the first group becomes weak. For this reason, a total optical length is elongated, which is inappropriate for miniaturization.
For that reason, a clearance becomes large in an optical axis direction, and the production in the form of a wafer becomes difficult to be performed. When the upper limit is exceeded, the power becomes too strong to perform the production due to a degradation of a production tolerance of inter-group decentering.
The conditional expression (5) is a conditional expression on a curvature radius R2 (R4 in Fig. 2) of the second surface SF2.
[Expression 5]

$$0.4 \leq R2/f \leq 5.0 \ ... \ (5)$$

In the conditional expression (5), when the lower limit is exceeded, a curvature becomes strong and an off-axis upper light beam causes a total reflection.

When the upper limit is exceeded, the power of an aberration correction becomes weak, and optical characteristics are lowered out of the axis due to a comatic aberration and an astigmatism.

The conditional expression (6) is a conditional expression on a curvature radius R3 (R5 in Fig. 2) of the third surface SF3.

[Expression 6]

$$-10 \leq R3/f \leq -0.3 \ldots (6)$$

In the conditional expression (6), when the lower limit is exceeded, the power of an aberration correction becomes weak, and optical characteristics are lowered out of the axis due to a comatic aberration and an astigmatism. When the upper limit is exceeded, a curvature becomes strong, and an off-axis light beam is given a large angle. Therefore, an angle of the light beam entering the imager becomes large, and problems such as a color mixture, a light falloff, and the like occur, which deteriorates characteristics.

The conditional expressions (1) to (6) described above are common to Examples 1 and 2 below, and by appropriately adopting them as necessary, more-favorable imaging performance suitable for individual image pickup devices or an image pickup apparatus, and a compact optical system are realized.

It should be noted that the aspheric shape of the lens is expressed by the following expression, with the direction from the object side to the image plane side being a positive direction, k representing a cone constant, A, B, C, and D each representing an aspheric constant, and r representing a center curvature radius. y represents a height of a light beam from the optical axis, and c represents an inverse number of the center curvature radius r (1/r).

It should be noted that X represents a distance from a tangent plane with respect to an apex of the aspheric shape, A represents a fourth-order aspheric constant, B represents a sixth-order aspheric constant, C represents an eighth-order aspheric constant, and D represents a tenth-order aspheric constant.

[Expression 7]

Aspheric equation

$$X = \frac{cy^2}{1 + \sqrt{1 - (1+k)c^2 y^2}} + Ay^4 + By^6 + Cy^8 + Dy^{10}$$

Fig. 2 is a diagram showing surface numbers assigned to the lenses and the substrate constituting the lens groups of the image pickup lens of this embodiment and the cover glass constituting an image pickup portion.

Specifically, a first surface number is assigned to the object side surface (convex surface) of the first lens element 111, and a second surface number is assigned to the boundary surface (bonding surface) between the image plane side surface of the first lens element 111 and the object side surface of the transparent body.

A third surface number is assigned to the boundary surface (bonding surface) between the image plane side surface of the transparent body 112 and the object side surface of the second lens element 113.

A fourth surface number is assigned to the image plane side surface (concave surface) of the second lens element 113.

A fifth surface number is assigned to the object side surface (concave surface) of the third lens element 121, and a sixth surface number is assigned to the image plane side surface of the third lens element 121.

A seventh surface number is assigned to the image plane.

Further, as shown in Fig. 2, in the image pickup lens 100 of this embodiment, the center curvature radius of the object side surface (#1) 1 of the first lens element 111 is set to be R1.

The center curvature radius of the boundary surface (bonding surface) 2 between the image plane side surface of the first lens element 111 and the object side surface of the transparent body 112 is set to be R2.

The center curvature radius of the boundary surface (bonding surface) 3 between the image plane side surface of the transparent body 112 and the object side surface of the second lens element 113 is set to be R3.

The center curvature radius of the image plane side surface (concave surface) 4 of the second lens element 113 is set to be R4.

The center curvature radius of the image plane side surface (concave surface) 5 of the third lens element 121 is set to be R5, and the center curvature radius of the image plane side surface 6 of the third lens element 121 is set to be R6. The center curvature radius of the surface 7 of the image plane 130 is set to be R7.

It should be noted that the center curvature radiuses R2, R3, and R7 of the surfaces 2, 3, and 7 are infinite (INFINITY).

Further, as shown in Fig. 2, a distance between the surfaces 1 and 2 as a thickness of the first lens element 111 on the optical axis OX is set to be d1, and a distance between the surfaces 2 and 3 as a thickness of the second lens element 112 on the optical axis OX is set to be d2.

A distance between the surfaces 3 and 4 as a thickness of the second lens element 113 on the optical axis OX is set to be d3, and a distance between the image plane side surface 4 of the second lens element 113 and the object side surface 5 of the third lens element 121 on the optical axis OX is set to be d4.

A distance between the surfaces 5 and 6 as a thickness of the third lens element 121 on the optical axis OX is set to be d5, and a distance between the image plane side surface 6 of the third lens element 121 and the object side surface 7 of the image plane 130 on the optical axis OX is set to be d6.

Hereinafter, Example 1 that uses specific numerical values of the image pickup lens will be described. It should be noted that in Example 1, the surface numbers as shown in Fig. 2 are assigned to the lens elements and glass substrates (transparent bodies) of the image pickup lens 100 and the image plane 130 constituting the image pickup portion.

[Example 1]

Tables 1, 2, 3, and 4 show numerical values of Example 1. The numerical values of Example 1 correspond to the image pickup lens 100 shown in Fig. 1.

Example 1 is a design example for a 3 mega-pixel CMOS imager having a size of 1/5 and a pitch of 1.4 $\mu$m.

As described above, the image pickup lens 100 is constituted of the first lens group 110 and the second lens group 120, and the first lens group 110 is structured as follows.

The first lens element 111 having a plane-convex shape and an Abbe number of 57.3 is attached to the object side surface of the glass plate corresponding to BK7, and the second lens element 113 having a plane-concave shape and an Abbe number of 43.4 is attached to the opposite side.

Here, a diaphragm is realized by attaching in advance a material allowing substantially no transmission, such as a chromium film, on the object side of the glass substrate.

Moreover, an IR cut filter is also added.

The second lens group 120 is constituted of only the third lens element 121 obtained by forming a single glass material having an Abbe number of 29 in the form of a lens.

Here, the first lens group 110 has a strong positive power and the second lens group 120 has a strong negative power, which form a lens unit in which an optical path length is short and a chromatic aberration is favorably corrected.

Further, the second surface SF2 and the third surface SF3 face each other with the air therebetween and both of them have a concave shape. Because of a large difference in length between an upper light beam and a lower light beam that pass through the air in an off-axis light flux, a comatic aberration and an astigmatism are favorably corrected.

Table 1 shows the curvature radiuses (R: mm), intervals (d: mm), refractive indexes (nd), and dispersion values ($v_d$) of the lens elements, buffer layer, and glass substrates (transparent bodies) corresponding to the surface numbers of the image pickup lens and the cover glass constituting the image pickup portion in Example 1.

[Table 1]

| Structural data of lens of Example 1 | | | | |
|---|---|---|---|---|
| Surface No. | R | d | nd | $v_d$ |
| 1: | 0.887 | 0.600 | 1.51 | 57.3 |
| 2: | INFINITY | 0.500 | 1.52 | 55.0 |
| 3: | INFINITY | 0.045 | 1.53 | 43.4 |
| 4: | 3.163 | 0.160 | | |
| 5: | -2.179 | 1.617 | 1.60 | 29.0 |
| 6: | 13.155 | 0.000 | | |

(continued)

| Structural data of lens of Example 1 | | | | |
|---|---|---|---|---|
| Surface No. | R | d | nd | $\nu_d$ |
| 7: | INFINITY | 0.417 | | |

Table 2 shows the fourth-, sixth-, eighth-, and tenth-order aspheric constants of the surface 1 of the first lens element 111, the surface 4 of the second lens element 113, the surface 5 of the third lens element 121, and the surface 6 of the third lens element 121 that include the aspheric surface in Example 1.
In Table 2, K represents a cone constant, A represents a fourth-order aspheric constant, B represents a sixth-order aspheric constant, C represents an eighth-order aspheric constant, and D represents a tenth-order aspheric constant.
[Table 2]

| Aspheric surface data of Example 1 | | | | | |
|---|---|---|---|---|---|
| First surface | K: - 2.628 | A: 0.444E+0 0 | B: - 0.150E+00 | C: 0.282E+00 | D: - 0.840E-01 |
| Fourth surface | K: 8.522 | A: - 0.105E-01 | B: 0.583E+00 | C: - 0.181E+01 | D: 0.631E+01 |
| Fifth surface | K: 10.000 | A: - 0.493E+0 0 | B: - 0.941E+00 | C: - 0.615E+01 | D: 0.348E+01 |
| Sixth surface | K: - 10.000 | A: - 0.804E-01 | B: 0.152E-01 | C: - 0.166E-01 | D: 0.218E-02 |

Table 3 specifically shows a focal length f, a numerical aperture F, a half field angle $\omega$, and a lens length H of the image pickup lens 100 in Example 1.
Here, the focal length f is set to 2.94 [mm], the numerical aperture F is set to 2.8, the half field angle $\omega$ is set to 32.0 deg, and the lens length H is set to 3.34 [mm].
[Table 3]

| Structural data of Example 1 |
|---|
| f (focal length) = 2.94 mm |
| F (numerical aperture) = 2.8 |
| $\omega$ (half field angle) = 32.0 deg |
| H (total lens length) = 3.34 mm |

Table 4 shows that the conditional expressions (1) to (6) above are satisfied in Example 1.
[Table 4]

| Values of conditional expressions in Example 1 | |
|---|---|
| Conditional expression/Example | 1 |
| (1) | 57.3 |
| (2) | 29.0 |
| (3) | 0.71 |
| (4) | -1.01 |
| (5) | 1.07 |
| (6) | -0.74 |

As shown in Table 4, in Example 1, the Abbe number $\nu_{L1}$ of the first lens element 111 forming the first lens group 110 is set to 57.3, thus satisfying the condition defined in the conditional expression (1).

The Abbe number $\nu_{L3}$ of the third lens element 121 forming the second lens group 120 is set to 29.0, thus satisfying the condition defined in the conditional expression (2).

The combined focal length fg1 of the first lens group 110 is set to 0.71, thus satisfying the condition defined in the conditional expression (3).

The combined focal length fg2 of the second lens group 120 is set to -1.01, thus satisfying the condition defined in the conditional expression (4).

The curvature radius R2 (R4 in Fig. 2) of the image plane side surface of the second lens element 113, that is, the second surface of the whole is set to 1.07, thus satisfying the condition defined in the conditional expression (5).

The curvature radius (R5 in Fig. 2) of the object side surface of the third lens element 121, that is, the third surface of the whole is set to -0.74, thus satisfying the condition defined in the conditional expression (6).

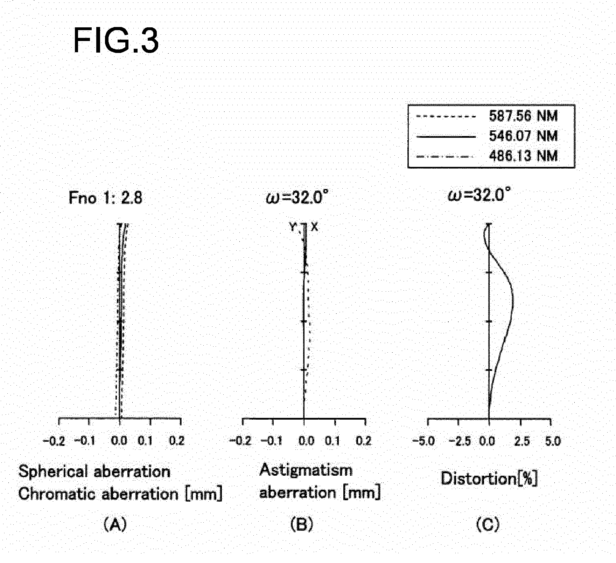

Figs. 3 are aberration diagrams respectively showing a spherical aberration (chromatic aberration), an astigmatism, and a distortion in Example 1. Fig. 3(A) shows the spherical aberration (chromatic aberration), Fig. 3(B) shows the astigmatism, and Fig. 3(C) shows the distortion.

As can be seen from Figs. 3, according to Example 1, various aberrations of the spherical aberration, astigmatism, and distortion are corrected favorably, and an image pickup lens including an optical unit having excellent imaging performance can be obtained.

<2. Second embodiment>

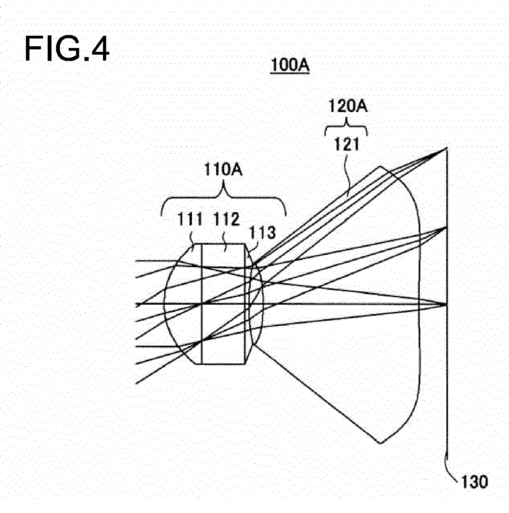

Fig. 4 is a diagram showing a structural example of an image pickup lens according to a second embodiment of the present invention.

The image pickup lens 100A of the second embodiment shown in Fig. 4 has basically the same structure as the image pickup lens 100 of the first embodiment shown in Fig. 1, and setting values of parameters and the like of the constituent elements differ as shown in Example 2 below.

Therefore, specific description on the image pickup lens 100A will be omitted herein.

Hereinafter, Example 2 that uses specific numerical values of the image pickup lens will be described. It should be noted that in Example 2, the surface numbers as shown in Fig. 2 are assigned to the lens elements and glass substrates (transparent bodies) of the image pickup lens 100A and the image plane 130 constituting the image pickup portion.

An image pickup lens 110A is constituted of a first lens 110A group and a second lens group 120A, and the first lens group 110A is structured as follows.

The first lens element 111 having a plane-convex shape and an Abbe number of 53.1 is attached to the object side of the glass plate corresponding to BK7, and the second lens element 113 having a plane-concave shape and an Abbe number of 41.6 is attached to the opposite side.

Here, a diaphragm is realized by attaching in advance a material allowing substantially no transmission, such as a chromium film, on the object side of the glass substrate.

Moreover, an IR cut filter is also added.

The second lens group 120A is constituted of only the third lens element 121 obtained by forming a single glass material having an Abbe number of 41.6 in the form of a lens.

Here, the first lens group 110A has a strong positive power and the second lens group 120A has a strong negative power, which form a lens unit in which an optical path length is short and a chromatic aberration is favorably corrected. Further, the second surface SF2 and the third surface SF3 face each other with the air therebetween and both of them have a concave shape. Because of a large difference in length between an upper light beam and a lower light beam that pass through the air in an off-axis light flux, a comatic aberration and an astigmatism are favorably corrected.

[Example 2]

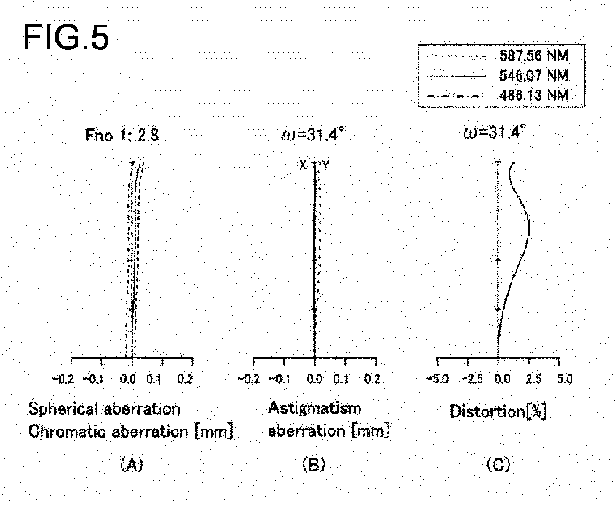

Tables 5, 6, 7, and 8 show numerical values of Example 2. The numerical values of Example 2 correspond to the image pickup lens 100A shown in Fig. 5.

Example 2 is a design example for a 3 mega-pixel CMOS imager having a size of 1/5 and a pitch of 1.4 $\mu$m.

Table 5 shows the curvature radiuses (R: mm), intervals (d: mm), refractive indexes (nd), and dispersion values ($\nu_d$) of the lens elements, buffer layer, and glass substrates (transparent bodies) corresponding to the surface numbers of the image pickup lens and the cover glass constituting the image pickup portion in Example 2.

[Table 5]

| Structural data of Example 2 | | | | |
|---|---|---|---|---|
| Surface No. | R | d | nd | $v_d$ |
| 1: | 0.847 | 0.438 | 1.51 | 53.1 |
| 2: | INFINITY | 0.505 | 1.52 | 55.0 |
| 3: | INFINITY | 0.052 | 1.54 | 41.6 |
| 4: | 2.818 | 0.162 | | |
| 5: | -2.062 | 1.822 | 1.54 | 41.6 |
| 6: | 8.529 | 0.050 | | |
| 7: | INFINITY | 0.279 | | |

Table 6 shows the fourth-, sixth-, eighth-, and tenth-order aspheric constants of the surface 1 of the first lens element 111, the surface 4 of the second lens element 113, the surface 5 of the third lens element 121, and the surface 6 of the third lens element 121 that include the aspheric surface in Example 2.
In Table 6, K represents a cone constant, A represents a fourth-order aspheric constant, B represents a sixth-order aspheric constant, C represents an eighth-order aspheric constant, and D represents a tenth-order aspheric constant.
[Table 6]

| Aspheric surface data of Example 2 | | | | | |
|---|---|---|---|---|---|
| First surface | K: - 1.848 | A: 0.357E+00 | B: 0.145E+00 | C: - 0.569E-01 | D: 0.275E+00 |
| Fouth surface | K: 9.955 | A: 0.224E-01 | B: 0.533E+00 | C: - 0.172E+01 | D: 0.795E+01 |
| Fifth surface | K: 7.102 | A: - 0.527E+00 | B: 0.400E+00 | C: - 0.382E+01 | D: - 0.736E+01 |
| Sixth surface | K: - 10.000 | A: - 0.779E-01 | B: 0.430E-01 | C: - 0.325E-01 | D: 0.533E-02 |

Table 7 specifically shows a focal length f, a numerical aperture F, a half field angle ω, and a lens length H of the image pickup lens 100A in Example 2.
Here, the focal length f is set to 2.91 [mm], the numerical aperture F is set to 2.8, the half field angle ω is set to 31.4 deg, and the lens length H is set to 3.31 [mm].
[Table 7]

| Structural data of Example 2 |
|---|
| F (focal length) = 2.91 mm |
| F (numerical aperture) = 2.8 |
| ω (half field angle) = 31.4 deg |
| H (total lens length) = 3.31 mm |

Table 8 shows that the conditional expressions (1) to (6) above are satisfied in Example 2.
[Table 8]

| Values of conditional expressions in Example 2 | |
|---|---|
| Conditional expression/Example | 2 |
| (1) | 53.1 |
| (2) | 41.6 |

(continued)

| Values of conditional expressions in Example 2 | |
| --- | --- |
| Conditional expression/Example | 2 |
| (3) | 0.7 |
| (4) | -0.99 |
| (5) | 0.97 |
| (6) | -0.81 |

As shown in Table 8, in Example 2, the Abbe number $\nu_{L1}$ of the first lens element 111 forming the first lens group 110 is set to 53.1, thus satisfying the condition defined in the conditional expression (1).
The Abbe number $\nu_{L3}$ of the third lens element 121 of the second lens group 120 is set to 41.6, thus satisfying the condition defined in the conditional expression (2).
The combined focal length fg1 of the first lens group 110 is set to 0.70, thus satisfying the condition defined in the conditional expression (3).
The combined focal length fg2 of the second lens group 120 is set to -0.99, thus satisfying the condition defined in the conditional expression (4).
The curvature radius R2 (R4 in Fig. 2) of the image plane side surface of the second lens element 113, that is, the second surface of the whole is set to 0.97, thus satisfying the condition defined in the conditional expression (5).
The curvature radius (R5 in Fig. 2) of the object side surface of the third lens element 121, that is, the third surface of the whole is set to -0.81, thus satisfying the condition defined in the conditional expression (6).
Figs. 5 are aberration diagrams respectively showing a spherical aberration (chromatic aberration), an astigmatism, and a distortion in Example 2. Fig. 5(A) shows the spherical aberration (chromatic aberration), Fig. 5(B) shows the astigmatism, and Fig. 5(C) shows the distortion.
As can be seen from Figs. 5, according to Example 2, various aberrations of the spherical aberration, astigmatism, and distortion are corrected favorably, and an image pickup lens including an optical unit having excellent imaging performance can be obtained.

<3. Third embodiment>

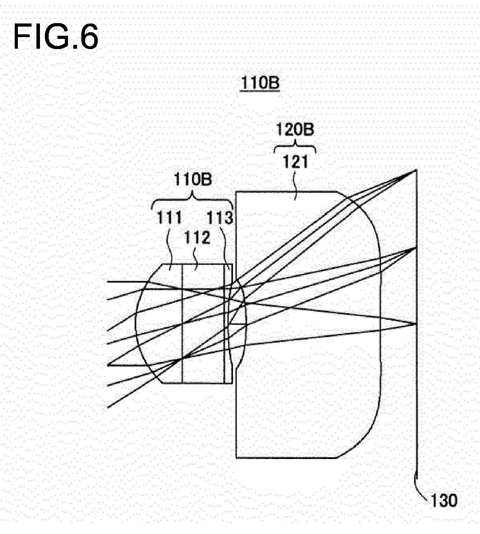

Fig. 6 is a diagram showing a structural example of an image pickup lens according to a third embodiment of the present invention.
The image pickup lens 100B of the third embodiment shown in Fig. 6 has basically the same structure as the image pickup lens 100 of the first embodiment shown in Fig. 1, and setting values of parameters and the like of the constituent elements differ as shown in Example 3 below.
Therefore, specific description on the image pickup lens 100B will be omitted herein.
Hereinafter, Example 3 that uses specific numerical values of the image pickup lens will be described. It should be noted that in Example 3, the surface numbers as shown in Fig. 2 are assigned to the lens elements and glass substrates (transparent bodies) of the image pickup lens 100B and the image plane 130 constituting the image pickup portion.
The image pickup lens 100B is constituted of a first lens group 110B and a second lens group 120B, and the first lens group 110B is structured as follows.
The first lens element 111 having a plane-convex shape and an Abbe number of 53.1 is attached to the object side of the glass plate corresponding to BK7, and the second lens element 113 having a plane-concave shape and an Abbe number of 41.6 is attached to the opposite side.
Here, a diaphragm is realized by attaching in advance a material allowing substantially no transmission, such as a chromium film, on the object side of the glass substrate.
The second lens group 120B is constituted of only the third lens element 121 as a molded plastic lens made of polycarbonate.
Here, the first lens group 110B has a strong positive power and the second lens group 120B has a strong negative power, which forms a lens unit in which an optical path length is short and a chromatic aberration is favorably corrected.
Further, the second surface SF2 and the third surface SF3 face each other with the air therebetween and both of them have a concave shape. Because of a large difference in length between an upper light beam and a lower light beam that pass through the air in an off-axis light flux, a comatic aberration and an astigmatism are favorably corrected.

[Example 3]

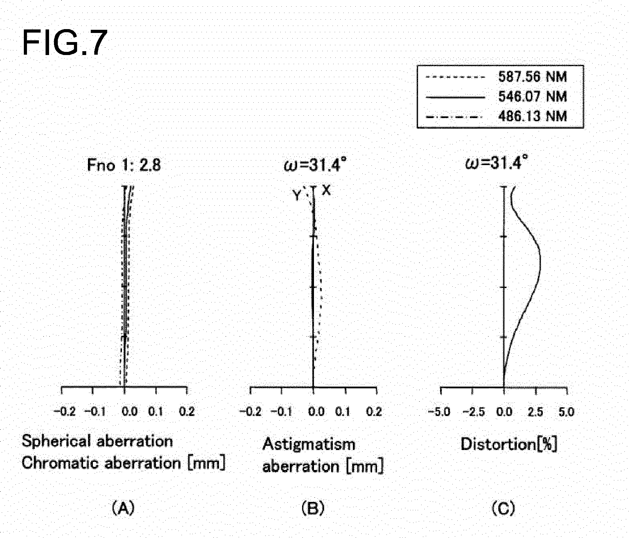

Tables 9, 10, 11, and 12 show numerical values of Example 3. The numerical values of Example 3 correspond to the image pickup lens 100B shown in Fig. 7.

Example 3 is a design example for a 3 mega-pixel CMOS imager having a size of 1/5 and a pitch of 1.4 μm.

Table 9 shows the curvature radiuses (R: mm), intervals (d: mm), refractive indexes (nd), and dispersion values ($v_d$) of the lens elements, buffer layer, and glass substrates (transparent bodies) corresponding to the surface numbers of the image pickup lens and the cover glass constituting the image pickup portion in Example 3.

[Table 9]

| Structural data of Example 3 | | | | |
|---|---|---|---|---|
| Surface No. | R | d | nd | $v_d$ |
| 1: | 0.903 | 0.554 | 1.51 | 57.3 |
| 2: | INFINITY | 0.5 | 1.52 | 55.0 |
| 3: | INFINITY | 0.045 | 1.53 | 43.4 |
| 4: | 3.059 | 0.21 | | |
| 5: | -2.51 | 1.591 | 1.59 | 30.0 |
| 6: | 15.716 | 0 | | |
| 7: | INFINITY | 0.425 | | |

Table 10 shows the fourth-, sixth-, eighth-, and tenth-order aspheric constants of the surface 1 of the first lens element 111, the surface 4 of the second lens element 113, the surface 5 of the third lens element 121, and the surface 6 of the third lens element 121 that include the aspheric surface in Example 3.

In Table 10, K represents a cone constant, A represents a fourth-order aspheric constant, B represents a sixth-order aspheric constant, C represents an eighth-order aspheric constant, and D represents a tenth-order aspheric constant.

[Table 10]

| Aspheric surface data of Example 3 | | | | | |
|---|---|---|---|---|---|
| First surface | K: - 4.486 | A: 0.718E+00 | B: - 0.857E+00 | C: 0.131E+01 | D: - 0.784E+00 |
| Fourth surface | K: - 7.003 | A: 0.765E-01 | B: 0.398E+00 | C: - 0.213E+00 | D: 0.210E+01 |
| Fifth surface | K: 10.000 | A: - 0.432E+00 | B: 0.104E+00 | C: - 0.115E+01 | D: - 0.479E+01 |
| Sixth surface | K: - 10.000 | A: - 0.499E-01 | B: - 0.813E-02 | C: - 0.794E-02 | D: 0.772E-03 |

Table 11 specifically shows a focal length f, a numerical aperture F, a half field angle ω, and a lens length H of the image pickup lens 100C in Example 3.

Here, the focal length f is set to 2.91 [mm], the numerical aperture F is set to 2.8, the half field angle ω is set to 31.4 deg, and the lens length H is set to 3.33 [mm].

[Table 11]

| Structural data of Example 3 |
|---|
| f (focal length) = 2.91 mm |
| F (numerical aperture) = 2.8 |
| ω (half field angle) = 31.4 deg |
| H (total lens length) = 3.33 mm |

Table 12 shows that the conditional expressions (1) to (6) above are satisfied in Example 3.
[Table 12]

| Values of conditional expressions in Example 3 | |
| --- | --- |
| Conditional expression/Example | 3 |
| (1) | 53.1 |
| (2) | 30.0 |
| (3) | 0.74 |
| (4) | -1.22 |
| (5) | 1.05 |
| (6) | -0.86 |

As shown in Table 12, in Example 3, the Abbe number $\nu_{L1}$ of the first lens element 111 of the first lens group 110 is set to 53.1, thus satisfying the condition defined in the conditional expression (1).

The Abbe number $\nu_{L3}$ of the third lens element 121 of the second lens group 120 is set to 30.0, thus satisfying the condition defined in the conditional expression (2).

The combined focal length fg1 of the first lens group 110 is set to 0.74, thus satisfying the condition defined in the conditional expression (3).

The combined focal length fg2 of the second lens group 120 is set to -1.22, thus satisfying the condition defined in the conditional expression (4).

The curvature radius R2 (R4 in Fig. 2) of the image plane side surface of the second lens element 113, that is, the second surface of the whole is set to 1.05, thus satisfying the condition defined in the conditional expression (5).

The curvature radius (R5 in Fig. 2) of the object side surface of the third lens element 121, that is, the third surface of the whole is set to -0.86, thus satisfying the condition defined in the conditional expression (6).

Figs. 7 are aberration diagrams respectively showing a spherical aberration (chromatic aberration), an astigmatism, and a distortion in Example 3. Fig. 7(A) shows the spherical aberration (chromatic aberration), Fig. 7(B) shows the astigmatism, and Fig. 7(C) shows the distortion.

As can be seen from Figs. 7, according to Example 3, various aberrations of the spherical aberration, astigmatism, and distortion are corrected favorably, and an image pickup lens including an optical unit having excellent imaging performance can be obtained.

<4. Fourth embodiment>

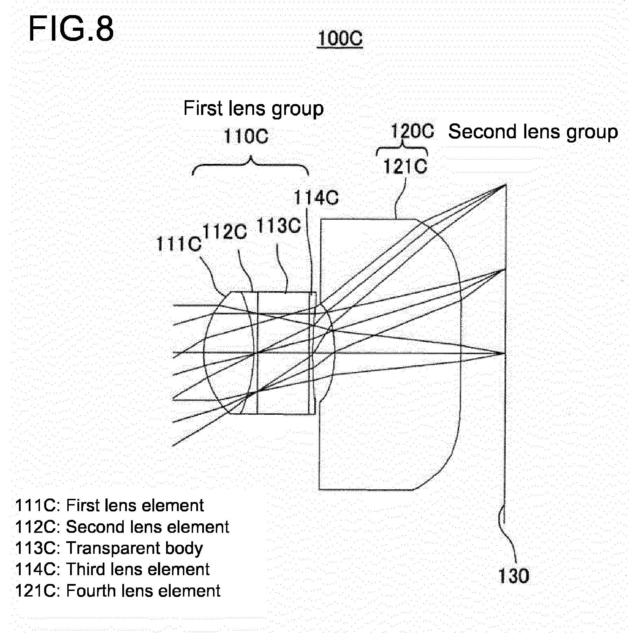

Fig. 8 is a diagram showing a structural example of an image pickup lens according to a fourth embodiment of the present invention.
The image pickup lens 100C according to the fourth embodiment shown in Fig. 8 is different from the other embodiments in the structure of a first lens group 110C.

The first lens group 110C is constituted of a bonded body including a first lens element 111C, a second lens element 112C, a transparent body 113C, and a third lens element 114C.

A second lens group 120C is constituted of only one fourth lens element 121C.
In the image pickup lens 100C, the lens groups are structured as follows.

In the first lens group 110C, the first lens element 111C having a convex shape on both surfaces and an Abbe number of, for example, 57.3 and the second lens element 113C having a plane-concave shape and an Abbe number of 29.6 are attached to the object side of a glass plate corresponding to BK7.

The third lens element 114C having a plane-concave shape and an Abbe number of 57.3 is attached to the opposite side. Here, a diaphragm is realized by attaching in advance a material allowing substantially no transmission, such as a chromium film, on the object side of the glass substrate.

In the similar manner, an IR cut filter is also provided in advance on the glass substrate by deposition.

Here, the first lens element 111C is formed of one having a convex shape on both surfaces and a large Abbe number, and the second lens element 112C is formed of one having a plane-concave shape and an Abbe number smaller than that of the first lens element.

Then, both of them form a doublet structure, thus obtaining a structure in which a chromatic aberration is eliminated more than in a unitary structure.

The second lens group 120C is constituted of only the fourth lens element 121C formed of a glass mold having an Abbe number of 57.3, for example.

The first lens group 110C has a strong positive power and the second lens group 120C has a strong negative power, which forms a lens unit in which an optical path length is short and a chromatic aberration is favorably corrected. Further, the first lens group 110C and the second lens group 120C face each other with the air therebetween and both of them have a concave shape. Because of a large difference in length between an upper light beam and a lower light beam that pass through the air in an off-axis light flux, a comatic aberration and an astigmatism are favorably corrected. For example, an on-axis chromatic aberration is 7.5 $\mu$m in Example 1, but it is suppressed to 4.3 $\mu$m in this Example.

In such a manner, according to the embodiments of the present invention, a 3 mega-pixel band camera module that has performance of a three-lens layer structure in a usual optical system and is extremely inexpensive is obtained. In order to achieve higher performance, however, it is useful to set a doublet lens as the first lens group 110C on the incident side.

With this, the performance corresponding to a 4-layer structure can be realized in the usual optical system.

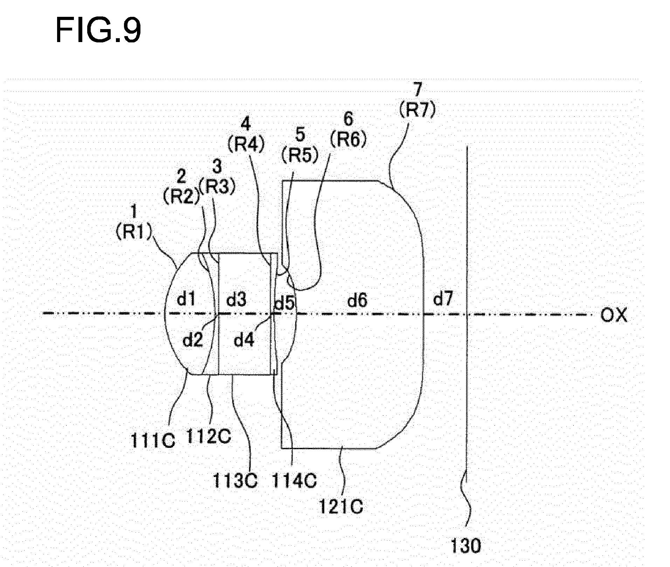

Fig. 9 is a diagram showing surface numbers assigned to the lenses and the substrate constituting the lens groups of the image pickup lens of this embodiment and the cover glass constituting the image pickup portion.

Specifically, a first surface number is assigned to the object side surface (convex surface) of the first lens element 111C, and a second surface number is assigned to the boundary surface (bonding surface) between the image plane side surface of the first lens element 111C and the object side surface of the second lens element 112C.

A third surface number is assigned to the boundary surface (bonding surface) between the image plane side surface of the second lens element 112C and the object side surface of the transparent body 113C.

A fourth surface number is assigned to the boundary surface (bonding surface) between the image plane side surface of the transparent body 113C and the object side surface of the third lens element 114C.

A fifth surface number is assigned to the image plane side surface (concave surface) of the third lens element 114C.

A sixth surface number is assigned to the object side surface (concave surface) of the fourth lens element 121C, and a seventh surface number is assigned to the image plane side surface of the fourth lens element 121C.

Further, as shown in Fig. 19, in the image pickup lens 100C of this embodiment, the center curvature radius of the object side surface (#1) 1 of the first lens element 111C is set to be R1.

The center curvature radius of the boundary surface (bonding surface) 2 between the image plane side surface of the first lens element 111C and the object side surface of the second lens element 112C is set to be R2.

The center curvature radius of the boundary surface (bonding surface) 3 between the image plane side surface of the second lens element 112C and the object side surface of the transparent body 113C is set to be R3.

The center curvature radius of the boundary surface (bonding surface) 4 between the image plane side surface of the transparent body 113C and the object side surface of the third lens element 114C is set to be R4.

The center curvature radius of the image plane side surface (concave surface) 5 of the third lens element 114C is set to be R5.

The center curvature radius of the object side surface (concave surface) 6 of the fourth lens element 121C is set to be R6, and the center curvature radius of the image plane side surface of the fourth lens element 121C is set to be R7.

It should be noted that the center curvature radiuses R3 and R4 of the surfaces 3 and 4 are infinite (INFINITY).

Further, as shown in Fig. 9, a distance between the surfaces 1 and 2 as a thickness of the first lens element 111C on the optical axis OX is set to be d1, and a distance between the surfaces 2 and 3 as a thickness of the second lens element 112C on the optical axis OX is set to be d2.

A distance between the surfaces 3 and 4 as a thickness of the transparent body 113C on the optical axis OX is set to be d3.

A distance between the surfaces 4 and 5 as a thickness of the third lens element 114C on the optical axis OX is set to be d4, and a distance between the image plane side surface 5 of the third lens element 114C and the object side surface 6 of the fourth lens element 121C on the optical axis OX is set to be d5.

A distance between the surfaces 6 and 7 as a thickness of the fourth lens element 121C on the optical axis OX is set to be d6, and a distance between the image plane side surface 7 of the fourth lens element 121C and the image plane 130 is set to be d7.

Hereinafter, Example 4 that uses specific numerical values of the image pickup lens will be described. It should be noted that in Example 4, the surface numbers as shown in Fig. 9 are assigned to the lens elements and glass substrate (transparent body) of the image pickup lens 100C and the image plane 130 constituting the image pickup portion.


[Example 4]


Tables 13, 14, 15, and 16 show numerical values of Example 4. The numerical values of Example 4 correspond to the image pickup lens 100C shown in Fig. 8.

Example 3 is a design example for a 3 mega-pixel CMOS imager having a size of 1/5 and a pitch of 1.4 $\mu$m.

Table 13 shows the curvature radiuses (R: mm), intervals (d: mm), refractive indexes (nd), and dispersion

values ($v_d$) of the lens elements, buffer layer, and glass substrate (transparent body) corresponding to the surface numbers of the image pickup lens and the cover glass constituting the image pickup portion in Example 4.

[Table 13]

| Structural data of lens of Example 4 | | | | |
|---|---|---|---|---|
| Surface No. | R | d | Nd | $v_d$ |
| 1: | 0.870 | 0.530 | 1.51 | 57.3 |
| 2: | -1.629 | 0.040 | 1.59 | 29.6 |
| 3: | INFINITY | 0.550 | 1.52 | 55.0 |
| 4: | INFINITY | 0.040 | 1.51 | 57.3 |
| 5: | 6.342 | 0.229 | | |
| 6: | -1.727 | 1.357 | 1.59 | 59.6 |
| 7: | 18.756 | 0.475 | | |

Table 14 shows the fourth-, sixth-, eighth-, and tenth-order aspheric constants of the surface 1 of the first lens element 111, the surface 5 of the third lens element 114C, the surface 6 of the fourth lens element 121C, and the surface 7 of the fourth lens element 121C that include the aspheric surface in Example 4.

In Table 14, K represents a cone constant, A represents a fourth-order aspheric constant, B represents a sixth-order aspheric constant, C represents an eighth-order aspheric constant, and D represents a tenth-order aspheric constant.

[Table 14]

| Aspheric surface data of Example 4 | | | | |
|---|---|---|---|---|
| First surface | K: - 1.374 | A: - 0.219E+00 | B: 0.294E+00 | C: - 0.626E+00 | D: 0.117E+01 |
| Fifth surface | K: - 0.614 | A: 0.511E-01 | B: 0.651E+00 | C: - 0.282E+01 | D: 0.775E+01 |
| Sixth surface | K: 7.103 | A: - 0.414E+00 | B: - 0.282E+00 | C: 0.225E+01 | D: - 0.142E+02 |
| Seventh surface | K: - 10.000 | A: - 0.675E-01 | B: - 0.367E-01 | C: 0.136E-01 | D: - 0.542E-02 |

Table 15 specifically shows a focal length f, a numerical aperture F, a half field angle $\omega$, and a lens length H of the image pickup lens 100C in Example 4.

Here, the focal length f is set to 2.92 [mm], the numerical aperture F is set to 2.8, the half field angle $\omega$ is set to 31.9 deg, and the lens length H is set to 3.22 [mm].

[Table 15]

| Structural data of Example 4 |
|---|
| F (focal length) = 2.92 mm |
| F (numerical aperture) = 2.8 |
| $\omega$ (half field angle) = 31.9 deg |
| H (total lens length) = 3.22 mm |

Table 16 shows that the conditional expressions (1) to (6) above are satisfied in Example 4.

[Table 16]

| Values of conditional expressions in Example 4 | |
|---|---|
| Conditional expression/Example | 4 |
| (1) | 57.3 |
| (2) | 57.3 |
| (3) | 0.68 |
| (4) | -0.90 |
| (5) | 2.17 |
| (6) | -0.59 |

As shown in Table 16, in Example 4, the Abbe number $\nu_{L1}$ of the first lens element 111 of the first lens group 110C is set to 57.3, thus satisfying the condition defined in the conditional expression (1).

The Abbe number $\nu_{L3}$ of the fourth lens element 121C of the second lens group 120C is set to 57.3, thus satisfying the condition defined in the conditional expression (2).

The combined focal length fg1 of the first lens group 110 is set to 0.68, thus satisfying the condition defined in the conditional expression (3).

The combined focal length fg2 of the second lens group 120 is set to -0.90, thus satisfying the condition defined in the conditional expression (4).

The curvature radius R2 (R4 in Fig. 2) of the image plane side surface of the second lens element 113, that is, the second surface of the whole is set to 2.17, thus satisfying the condition defined in the conditional expression (5).

The curvature radius (R6 in Fig. 9) of the object side surface of the fourth lens element 121C, that is, the third surface of the whole is set to -0.59, thus satisfying the condition defined in the conditional expression (6).

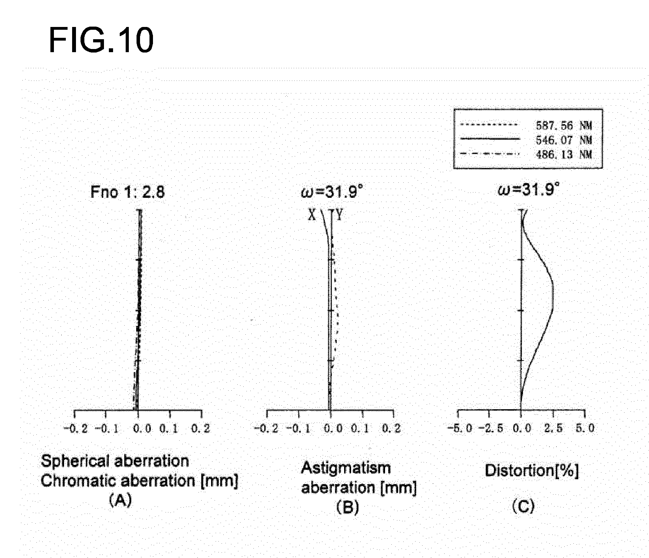

Figs. 10 are aberration diagrams respectively showing a spherical aberration (chromatic aberration), an astigmatism, and a distortion in Example 4. Fig. 10(A) shows the spherical aberration (chromatic aberration), Fig. 10(B) shows the astigmatism, and Fig.10(C) shows the distortion.

As can be seen from Figs. 10, according to Example 4, various aberrations of the spherical aberration, astigmatism, and distortion are corrected favorably, and an image pickup lens including an optical unit having excellent imaging performance can be obtained.

<5. Fifth embodiment>

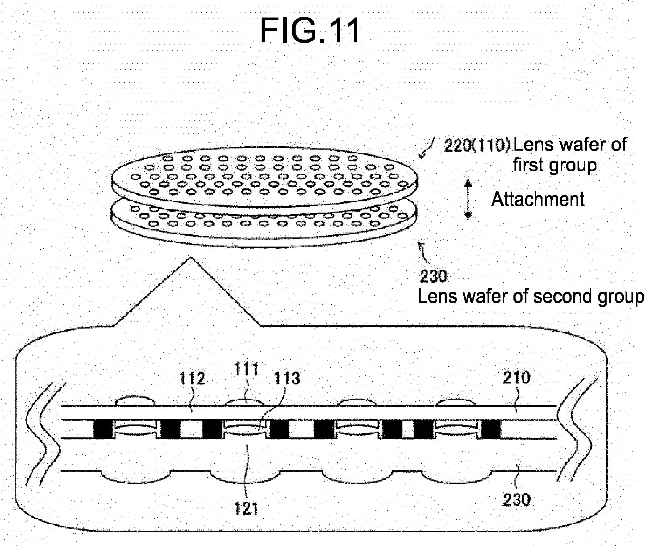

Fig. 11 is a diagram schematically showing wafer level optics according to a fifth embodiment of the present invention.

A large number of replica lenses are formed at the top and bottom of a glass substrate 210 to thus form a first group 220.

Next, a large number of single glass materials are formed in the form of a wafer to thus form a second group 230.

Those two wafer-like lenses are attached to each other to produce a large number of lenses at the same time.

Here, for the attachment, a spacer may be interposed, or a protector or spacer may be attached at the top or bottom.

In many cases, an IR cut filter is provided to the glass substrate of the first group.

<6. Sixth embodiment>

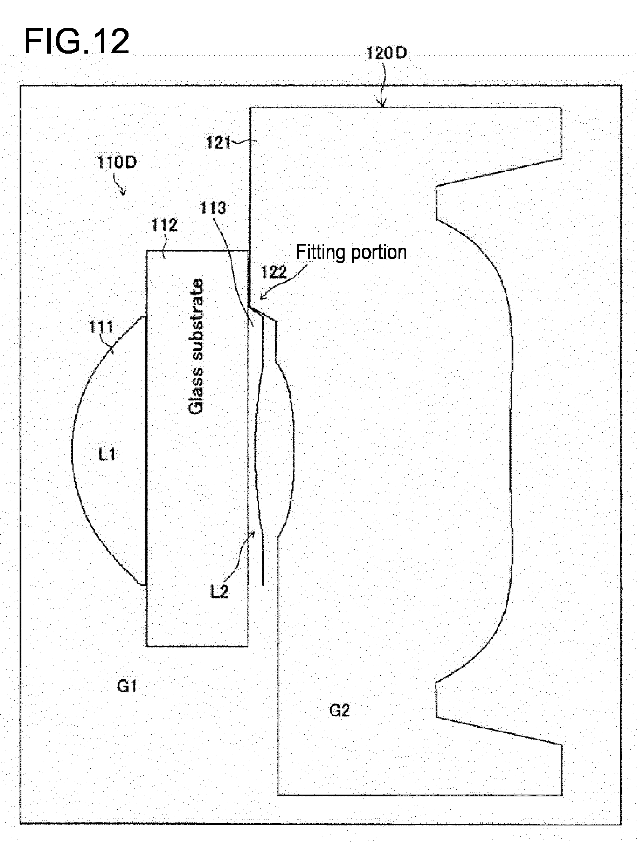

Fig. 12 is a diagram schematically showing an image pickup lens according to a sixth embodiment of the present invention.

Here, described is Example in which the first group is constituted of a piece obtained by individually cutting a hybrid-type wafer opt obtained after individual cutting, and the second group is constituted of a molded lens or a casting-type wafer opt obtained after individual cutting.

A first lens first group 110D is constituted of a piece obtained by forming a large number of IR cut filters and light-shield means on a glass substrate 112, forming replica lenses at the top and bottom of the glass substrate 112, and individually cutting them.

A second lens group 120D is constituted of a molded lens that is molded from a single glass material, or a casting-type wafer opt obtained after individual cutting.

Here, when the first lens group and the second lens group are attached to each other, a positioning is performed by fitting the first group and the second group based on shapes thereof out of the effective surfaces of the lenses.

For example, as shown in Fig. 12, a difference in level is provided to the outside of the first lens group 110D, and the first lens group 110D is thinned to an extent that the glass substrate is exposed, thus fitting the first lens group 110D with the second group at the level difference portion.

The second lens group 120D is provided with a difference in level such that a portion with a diameter larger than that of the level difference portion of the first lens group 110D is projected on the outside of the effective optical system, thus forming a recipient for the first group.

In such a manner, a positional accuracy in a decentering direction of the lens is maintained by the structure, and then an adhesive is applied to the outer circumferential portion to perform attachment. Thus, a lens barrel is completed.

According to this embodiment described above, the following effects can be obtained.

The two advantages described above, that is, a small number of parts for a hybrid and the capability of individual adjustment for conventional lenses, are provided, and it is possible to produce an image pickup lens as a lens device supporting high pixel count and additionally as a high pixel count camera module at lower costs.

The 3 mega or higher pixel count requires an optical design in which an on-axis chromatic aberration and various aberrations are sufficiently reduced. A specific example of the optical design is disclosed simultaneous with the disclosure of the system.

By setting the power of the first lens group to be strongly positive and the power of the second lens group to be strongly negative, the optical length can be shortened while suppressing optical aberrations as much as possible. At the same time, by using a glass material having a large Abbe number for the first group and using a glass material having a small Abbe number for the second group, a chromatic aberration is made small.

The second surface and the third surface face each other with the air therebetween and both of them have a concave shape. Because of a large difference in length between an upper light beam and a lower light beam that pass through the air in an off-axis light flux, a comatic aberration and an astigmatism are favorably corrected.

By setting the shape of the fourth surface to be almost convex with respect to the image side, less ghosts appear.

Consequently, an incident angle with respect to the sensor can be made obtuse so that optimal optical performance and sufficient back focus can be obtained.

As compared to an optimal system having a conventional 3-group 3-layer structure, that is, a 3-layer plastic structure or a 3-layer glass-plastic-plastic structure, for example, the present invention has more excellent optical characteristics than a conventional optical system having the same optical length.

Further, unlike a wafer opt, it can be formed into a circle nearly having an effective shape, and therefore the miniaturization is enabled. Furthermore, it can be mounted into a screw lens barrel, and therefore a conventional module assembly can be used and easy assembling is performed.

It is unnecessary to attach a filter after lens assembling as in the conventional case, and production at low costs is enabled. Further, the second group can be produced at low costs because a glass substrate and the like are not necessary.

In addition, since the first group has an area with an effective diameter of 1/10 times as large as that of the second group, in the case where the first group and the second group are assembled after individual cutting, the number of cavities of the first group is ten times larger. Also in this regard, production at low costs is enabled.

With those described above, as compared to the case of the conventional 3-layer structure of molded lens or wafer opt, production at lower costs is enabled.

Simultaneously, the present invention can also be structured as a lens device in which reflow is enabled depending on a selection of materials or as a lens device in which reflow is not enabled, but which can be produced at very low costs.

The present invention can be developed to various application products, which is advantageous.

Further, to achieve higher performance, it is useful to use a doublet lens for the first lens on the incident side. With this, an optical system in which a chromatic aberration is made smaller can be structured, and the performance corresponding to a 4-layer structure can be realized in a normal optical system.

The image pickup lenses 100, 100A, 100B, 100C, and 100D having the features as described above are applicable to a lens mounted on a digital camera that uses an image pickup device such as a CCD and a CMOS sensor, and particularly to a camera lens mounted on a compact electronic apparatus such as a cellular phone.

<7. Seventh embodiment>

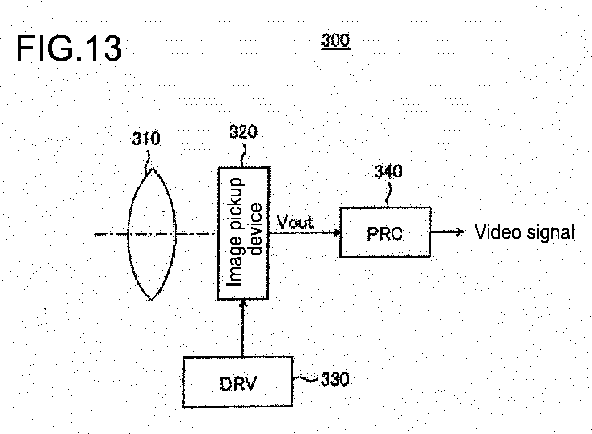

Fig. 13 is a block diagram showing a structural example of an image pickup apparatus adopting the image pickup lens including the optical unit according to this embodiment.

As shown in Fig. 13, an image pickup apparatus 300 includes an optical system 310 to which the image pickup lenses 100, 100A, 100B, 100C, and 100D of the embodiments are applied and an image pickup device 320 to which a CCD and a CMOS image sensor (solid-state image pickup device) can be applied.

The optical system 310 guides incident light to an imaging plane including a pixel area of the image pickup device 320 and forms a subject image.

The image pickup apparatus 300 also includes a driving circuit (DRV) 330 that drives the image pickup device 320 and a signal processing circuit (PRC) 340 that processes output signals of the image pickup device 320.

The driving circuit 330 includes a timing generator (not shown) that generates various timing signals including a start pulse and a clock pulse for driving circuits inside the image pickup device 320, and drives the image pickup device 320 based on a predetermined timing signal.

Further, the signal processing circuit 340 carries out predetermined signal processing on output signals from the image pickup device 320.

An image signal processed by the signal processing circuit 340 is recorded onto a recording medium such as a memory. Image information recorded onto the recording medium is hard-copied by a printer. Moreover, the image signal processed by the signal processing circuit 340 is displayed as a moving image on a monitor constituted of a liquid crystal display or the like.

As described above, in the image pickup apparatus such as a digital still camera, by mounting the image pickup lenses 100, 100A, 100B, 100C, and 100D described above as the optical system 310, a highly-accurate camera having a lower power consumption can be realized.

Description of Symbols

| | |
|---|---|
| 100,100A-100D | image pickup lens |
| 110, 110A-110D | first lens group |
| 111, 111C | first lens element |
| 112, 112C | second lens element |
| 113, 113C | transparent body (glass substrate) |
| 114C | third lens element |
| 121, 121C | fourth lens element |
| 130 | image plane |
| 200 | doublet lens |
| 300 | image pickup apparatus |
| 310 | optical system |
| 320 | image pickup device |
| 330 | driving circuit (DRV) |
| 340 | signal processing circuit (PRC) |

**Claims**

1. An optical unit, comprising:

   a hybrid-type lens including a plurality of resin lenses formed on a plate-like substrate, the hybrid-type lens including at least one group; and
   a lens referred to as a casting, mold, or the like in which a resin is integrally formed, the lens including at least one group.

2. An optical unit, comprising:

   a first lens group; and
   a second lens group, the first lens group and the second lens group being sequentially arranged from an object side to an image plane side,
   the first lens group including
   a first lens element,
   a transparent body, and
   a second lens element, the first lens element, the transparent body, and the second lens element being sequentially arranged from the object side to the image plane side,
   the second lens group including only a third lens element.

3. The optical unit according to claim 2, wherein
   an Abbe number $\nu_{L1}$ of the first lens element and an Abbe number $\nu_{L3}$ of the third lens element satisfy the following conditional expressions,

$$45 \leq \nu_{L1} \leq 80 \quad (1)$$

$$20 \leq \nu_{L3} \leq 67 \quad (2).$$

**4.** The optical unit according to claim 2 or 3, wherein
a focal length fg1 of the first lens group and a focal length fg2 of the second lens group satisfy the following conditional expressions,

$$0.4 \leq fg1/f \leq 2.5 \quad (3)$$

$$-10 \leq fg2/f \leq -0.4 \quad (4)$$

where f represents a total focal length.

**5.** The optical unit according to any one of claims 2 to 4, wherein
a curvature radius R2 of a second surface and a curvature radius R3 of an incident surface of the third lens element satisfy the following conditional expressions,

$$0.4 \leq R2/f \leq 5.0 \quad (5)$$

$$-10 \leq R3/f \leq -0.3 \quad (6)$$

**6.** The optical unit according to any one of claims 2 to 5, wherein
the first lens group and the second lens group are fitted through molding surfaces that are the same as a lense effective surface, to thereby perform positioning at a time of assembling.

**7.** An optical unit, comprising:

a first lens group; and
a second lens group, the first lens group and the second lens group being sequentially arranged from an object side to an image plane side,
the first lens group including
a first lens element,
a second lens element,
a transparent body, and
a third lens element, the first lens element, the second lens element, the transparent body, and the third lens element being sequentially arranged from the object side to the image plane side, the first lens element and the second lens element forming a doublet lens,
the second lens group including only a fourth lens element.

**8.** The optical unit according to claim 7, wherein
the first lens element that forms the doublet is convex on both surfaces, and
the second lens element is plane-concave.

**9.** The optical unit according to claim 8, wherein
an Abbe number of the first lens element is larger than that of the second lens element.

**10.** An image pickup apparatus, comprising:

an image pickup device; and
an optical unit to form an image of a subject on the image pickup device, the optical unit including

a first lens group, and

a second lens group, the first lens group and the second lens group being sequentially arranged from an object side to an image plane side,

the first lens group including

a first lens element,

a transparent body, and

a second lens element, the first lens element, the transparent body, and the second lens element being sequentially arranged from the object side to the image plane side,

the second lens group including only a third lens element.

11. An image pickup apparatus, comprising:

an image pickup device; and

an optical unit to form an image of a subject on the image pickup device, the optical unit including

a first lens group, and

a second lens group, the first lens group and the second lens group being sequentially arranged from an object side to an image plane side,

the first lens group including

a first lens element,

a second lens element,

a transparent body, and

a third lens element, the first lens element, the second lens element, the transparent body, and the third lens element being sequentially arranged from the object side to the image plane side, the first lens element and the second lens element forming a doublet lens,

the second lens group including only a fourth lens element.

# FIG.1

100

120 Second lens group

121

First lens group
110

111 112 113

(OBJ)

111: First lens element
112: Transparent body (glass substrate)
113: Second lens element
121: Third lens element

SF1

SF3

SF2

SF4

130

FIG.2

# FIG.3

| | 587.56 NM |
|---|---|
| | 546.07 NM |
| | 486.13 NM |

Fno 1: 2.8

Spherical aberration
Chromatic aberration [mm]

(A)

$\omega$=32.0°

Y X

Astigmatism
aberration [mm]

(B)

$\omega$=32.0°

Distortion[%]

(C)

EP 2 520 964 A1

FIG.4

100A

120A
121

110A

111 112 113

130

25

# FIG.5

| | |
|---|---|
| ---------- | 587.56 NM |
| ———— | 546.07 NM |
| —·—·— | 486.13 NM |

Fno 1: 2.8    ω=31.4°    ω=31.4°

-0.2 -0.1 0.0 0.1 0.2

-0.2 -0.1 0.0 0.1 0.2

-5.0 -2.5 0.0 2.5 5.0

Spherical aberration
Chromatic aberration [mm]

Astigmatism
aberration [mm]

Distortion[%]

(A)          (B)          (C)

EP 2 520 964 A1

FIG.6

110B

120B
121

110B

111  113
112

130

27

# FIG.7

| | |
|---|---|
| - - - - - - - | 587.56 NM |
| ———— | 546.07 NM |
| - · - · - · | 486.13 NM |

Fno 1: 2.8

$\omega$=31.4°

$\omega$=31.4°

Y : X

-0.2  -0.1  0.0  0.1  0.2

-0.2  -0.1  0.0  0.1  0.2

-5.0  -2.5  0.0  2.5  5.0

Spherical aberration
Chromatic aberration [mm]

Astigmatism
aberration [mm]

Distortion[%]

(A)

(B)

(C)

# FIG.8

100C

First lens group
110C

120C  Second lens group

121C

114C

111C 112C 113C

111C: First lens element
112C: Second lens element
113C: Transparent body
114C: Third lens element
121C: Fourth lens element

130

# FIG.9

# FIG.10

| | 587. 56 NM |
|---|---|
| | 546. 07 NM |
| | 486. 13 NM |

Fno 1: 2.8

-0.2 -0.1 0.0 0.1 0.2

Spherical aberration
Chromatic aberration [mm]
(A)

ω=31.9°

X    Y

-0.2 -0.1 0.0 0.1 0.2

Astigmatism
aberration [mm]
(B)

ω=31.9°

-5.0 -2.5 0.0 2.5 5.0

Distortion[%]
(C)

# FIG.11

220(110) Lens wafer of first group

Attachment

230
Lens wafer of second group

112　111　113　　　　　　　　　210

121

230

EP 2 520 964 A1

# FIG.12

110D

120D

121

112

113

111

122  Fitting portion

Glass substrate

L1

L2

G1

G2

33

FIG.13                                    300

**INTERNATIONAL SEARCH REPORT**

| | International application No. |
|---|---|
| | PCT/JP2010/007378 |

A. CLASSIFICATION OF SUBJECT MATTER
*G02B13/00*(2006.01)i, *G02B7/02*(2006.01)i, *G02B13/18*(2006.01)i

According to International Patent Classification (IPC) or to both national classification and IPC

B. FIELDS SEARCHED

Minimum documentation searched (classification system followed by classification symbols)
G02B13/00, G02B7/02, G02B13/18

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2009/101928 A1  (Konica Minolta Opto, Inc.),<br>20 August 2009 (20.08.2009),<br>paragraph [0089]; fig. 5 to 7<br>& EP 2246722 A1          & WO 2009/101928 A1 | 1-5,10<br>6-9,11 |
| X<br>Y | WO 2009/004965 A1  (Konica Minolta Opto, Inc.),<br>08 January 2009 (08.01.2009),<br>paragraphs [0091] to [0100]; fig. 9<br>& US 2010/0188555 A       & EP 2163931 A1<br>& EP 2116882 A1           & WO 2009/004965 A1<br>& WO 2008/102776 A1       & CN 101688967 A<br>& KR 10-2010-0025551 A | 1-5,10<br>6-9,11 |
| Y | JP 2009-098614 A  (Komatsu Lite Mfg. Co., Ltd.),<br>07 May 2009 (07.05.2009),<br>paragraph [0014]; fig. 1<br>& WO 2009/047868 A1 | 6 |

☒ Further documents are listed in the continuation of Box C.     ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>29 March, 2011 (29.03.11) | Date of mailing of the international search report<br>12 April, 2011 (12.04.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/007378

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2009-301046 A  (Konica Minolta Opto, Inc.), 24 December 2009 (24.12.2009), paragraph [0202]; fig. 16<br>& JP 2008-233884 A         & JP 4293291 B<br>& JP 2009-157402 A         & JP 2010-2921 A<br>& US 2010/0046096 A        & US 2010/0091387 A<br>& US 2010/0134903 A        & US 2010/0134905 A<br>& US 2010/0166413 A        & EP 2113800 A1<br>& EP 2113802 A1            & EP 2124081 A1<br>& EP 2113801 A1            & EP 2116882 A1<br>& WO 2008/102648 A1 | 7-9,11 |
| A | JP 2009-251367 A  (Konica Minolta Opto, Inc.), 29 October 2009 (29.10.2009), paragraph [0068]; fig. 6 (Family: none) | 7-9,11 |

Form PCT/ISA/210 (continuation of second sheet) (July 2009)

<div style="text-align: center;">

**INTERNATIONAL SEARCH REPORT**

</div>

| International application No. |
|---|
| PCT/JP2010/007378 |

---

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III    Observations where unity of invention is lacking (Continuation of item 3 of first sheet)**

This International Searching Authority found multiple inventions in this international application, as follows:

```
    Any clear difference cannot be found between the invention in claim 1 and
the invention described in WO 2009/101928 A1.  Therefore, the invention in
claim 1 cannot be considered to be novel in the light of the invention described
in WO 2009/101928 A1, and does not have a special technical feature.
                                                    (continued to extra sheet)
```

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| INTERNATIONAL SEARCH REPORT | International application No. |
|---|---|
| | PCT/JP2010/007378 |

Continuation of Box No.III of continuation of first sheet(2)

(Furthermore, the technical feature common to the invention in claim 1, the inventions in claims 2 - 6, 10 and the inventions in claims 7 - 9, 11 is not obviously novel, and therefore does not involve a special technical feature). Consequently, three inventions (invention groups) each having a special technical feature as indicated below are involved in claims.

(Invention 1) the invention in claim 1
(Invention 2) the inventions in claims 2 - 6, 10
(Invention 3) the inventions in claims 7 - 9, 11

Form PCT/ISA/210 (extra sheet) (July 2009)

**EP 2 520 964 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060044450 A1
- JP 2005352317 A